# EUROPÄISCHE PATENTSCHRIFT

(11) **EP 2 652 276 B1**
(45) Veröffentlichungstag und Bekanntmachung des Hinweises auf die Patenterteilung: **25.02.2015**
(21) Anmeldenummer: 11796680.4
(22) Anmeldetag: 09.12.2011
(51) Int. Cl.: F01N 3/20, F16L 25/01

(54) **FLÜSSIGKEITSENTNAHMEMODUL, FLÜSSIGKEITSTANK**
LIQUID EXTRACTION MODULE, LIQUID TANK
MODULE DE PRÉLÈVEMENT DE LIQUIDE, RÉSERVOIR DE LIQUIDE

(30) Priorität: 14.12.2010 DE 102010062985
(43) Veröffentlichungstag der Anmeldung: 23.10.2013
(73) Patentinhaber: Robert Bosch GmbH, 70442 Stuttgart (DE)
(72) Erfinder: LANDES, Ewgenij, 71686 Remseck (DE); SCHOTT, Steffen, 71701 Schwieberdingen (DE)
(86) Internationale Anmeldenummer: PCT/EP2011/072341
(87) Internationale Veröffentlichungsnummer: WO 2012/080132

(56) Entgegenhaltungen:
- DE-A1-102008 040 843
- DE-A1-102008 043 197
- US-A1- 2006 120 893

## Beschreibung

Die Erfindung betrifft ein Flüssigkeitsentnahmemodul zur Entnahme von Flüssigkeit aus einem Flüssigkeitstank, insbesondere eines Abgasnachbehandlungssystems eines Kraftfahrzeugs, mit einem zumindest im Wesentlichen aus Kunststoff gefertigten Einsatzteil, das wenigstens eine Entnahmeöffnung und wenigstens einen Steckanschluss zum elektrischen Kontaktieren eines elektrischen Verbrauchers des Flüssigkeitsentnahmemoduls aufweist.

Ferner betrifft die Erfindung einen Flüssigkeitstank, insbesondere für Abgasnachbehandlungssysteme eines Kraftfahrzeugs, mit einer Tanköffnung und mit einem in/an dem Flüssigkeitstank, die Tanköffnung verschließend angeordneten Flüssigkeitsentnahmemodul, das eine dem Tankinnenraum zugeordnete Entnahmeöffnung und wenigstens einen von außen zugänglichen Steckanschluss zum elektrischen Kontaktieren eines elektrischen Verbrauchers des Flüssigkeitsentnahmemoduls aufweist.

### Stand der Technik

Flüssigkeitsentnahmemodule sowie Flüssigkeitstanks der eingangs genannten Art sind bekannt, wie z.B. aus US 2006/120893. Aus der deutschen Offenlegungsschrift DE 10 2006 027 487 A1 ist beispielsweise ein Flüssigkeitstank bekannt, in welchen ein Flüssigkeitsentnahmemodul zur Entnahme von Flüssigkeit aus dem Flüssigkeitstank einsetzbar ist. Das Entnahmemodul umfasst eine Entnahmeöffnung, durch welche die Flüssigkeit ansaugbar ist. Zu dem Flüssigkeitsentnahmemodul gehört weiterhin eine Fördereinrichtung, die die Flüssigkeit durch die Entnahmeöffnung ansaugt. Zum Betreiben des Flüssigkeitsentnahmemoduls ist somit ein elektrischer Anschluss notwendig, der zumindest die Fördereinrichtung mit Strom versorgt. Hierzu ist es bekannt, das Flüssigkeitsentnahmemodul mit einem von außen zugänglichen Steckanschluss zu versehen, an welchen ein Gegenstecker durch Steckverbinden anschließbar ist. Hierdurch lässt sich das Flüssigkeitsentnahmemodul beispielsweise zur Instandhaltung einfach auswechseln.

### Offenbarung der Erfindung

Das erfindungsgemäße Flüssigkeitsentnahmemodul hat gegenüber den bekannten Flüssigkeitsentnahmemodulen den Vorteil, dass der Steckanschluss eine hohe Belastbarkeit aufweist und die Dichtheit des Systems dauerhaft gewährleistet.

Das erfindungsgemäße Flüssigkeitsentnahmemodul zeichnet sich dadurch aus, dass ein Gehäuse des Steckanschlusses separat ausgebildet ist und wenigsten einen umspritzten Hinterschnitt zur Befestigung an dem Einsatzteil aufweist. Der Steckanschluss und das Einsatzteil sind somit als zwei separate Teile des Flüssigkeitsentnahmemoduls ausgebildet. Dadurch kann jedes der Teile, der Steckanschluss und das Einsatzteil, materialtechnisch auf die ihm jeweils zugeordneten Aufgaben optimal abgestimmt werden. Sind zwei unterschiedliche Materialien vorgesehen, so lässt sich eine stoffschlüssige Verbindung zwischen dem Steckanschluss und dem Einsatzteil nur unter hohem zusätzlichen Aufwand fertigen. Erfindungsgemäß ist daher vorgesehen, dass das Gehäuse des Steckanschlusses einen Hinterschnitt aufweist, der zur Befestigung an dem Einsatzteil umspritzt ist. Bevorzugt ist der Hinterschnitt von dem Einsatzteil umspritzt, sodass bei der Fertigung zunächst der Steckanschluss beziehungsweise das Gehäuse des Steckanschlusses gefertigt wird und anschließend das Einsatzteil um den Hinterschnitt des Gehäuses herumgespritzt wird, wodurch eine form- und kraftschlüssige Verbindung zwischen dem Einsatzteil und dem Steckanschluss hergestellt wird. Der Steckanschluss kann nun aus einem Material, das mechanisch belastbar ist und eine hohe Lebensdauer aufweist, unabhängig von dem Einsatzteil gefertigt werden.
Die Dichtheit zwischen Steckergehäuse und Einsatzteil wird durch Zusatz von mindestens einem Haftvermittler im Werkstoff von mindestens einem der beiden Bauteile erhöht. Durch den Haftvermittler ensteht eine feste und vor allem dichte Verbindung zwischen beiden Werkstoffen, welche auch aus unterschiedlichen Kunststoffen oder anorganischen Werkstoffen bestehen können. Von besonderem Vorteil ist, wenn in mindestens einem Kunststoffwerkstoff mindestens Maleinsäureanhydrid als Haftvermittler verwendet wird. Dadurch sollte eine besonders gute Dichtheit erreicht werden, welche für die Stecker im Fahrzeugbau ausreicht/geeignet ist.

Gemäß einer bevorzugten Ausführungsform der Erfindung ist vorgesehen, dass der Hinterschnitt des Gehäuses von einem Zwischenstück umspritzt ist, das stoffschlüssig mit dem Einsatzteil verbunden/verbindbar ist. Gemäß der bevorzugten Ausführungsform ist also vorgesehen, dass das Gehäuse des Steckanschlusses nicht direkt von dem Material des Einsatzteils, sondern von dem Material eines Zwischenstücks im Bereich des Hinterschnitts umspritzt ist, sodass das Zwischenstück und das Gehäuse des Steckanschlusses formschlüssig und kraftschlüssig miteinander verbunden sind. Das Zwischenstück selbst ist aus einem Material gefertigt, welches stoffschlüssig mit dem Material des Einsatzteils verbindbar, insbesondere verschweißbar ist. Bevorzugt ist das Zwischenstück aus dem gleichen Material wie das Einsatzteil gefertigt. Auf diese Art und Weise lässt sich das Gehäuse des Steckanschlusses materialtechnisch an die Anforderungen der Steckverbindung anpassen und dennoch sicher und fest mit dem Einsatzteil nachträglich verbinden.

Vorzugsweise ist das Material des Steckanschlusses aus einem anderen Material wie das Einsatzteil gefertigt und das Zwischenstück aus dem gleichen Material wie das Einsatzteil.

Bevorzugt ist der Hinterschnitt des Gehäuses in Steckrichtung wirkend ausgerichtet, sodass eine formschlüssige Verbindung zwischen dem Gehäuse und dem Zwischenstück oder dem Einsatzteil in der Richtung besteht, in welcher die Kräfte beim Zusammenstecken oder beim Lösen der Steckverbindung auftreten.

Gemäß einer vorteilhaften Weiterbildung der Erfindung ist vorgesehen, dass sich der Hinterschnitt über die gesamte Breite des Gehäuses des Steckanschlusses, insbesondere über den gesamten Umfang des Gehäuses erstreckt. Hierdurch ist der Steckanschluss stark belastbar, ohne dass die Verbindung zwischen Steckanschluss und Einsatzteil beziehungsweise Zwischenstück Schaden nimmt.

Der Hinterschnitt ist vorzugsweise als Vertiefung in dem Gehäuse des Steckanschlusses ausgebildet. Auch ist es denkbar, mehrere nebeneinander liegende Vertiefungen vorzusehen, die zusammen den Hinterschnitt bilden. Auch ist es denkbar, anstelle einer Vertiefung einen oder mehrere Vorsprünge an dem Außenumfang des Gehäuses vorzusehen, die von der Spritzmasse umschlossen werden. Besonders bevorzugt ist auch eine Kombination aus mindestens einer Vertiefung und mindestens einem Vorsprung denkbar.

Besonders bevorzugt weist das Gehäuse des Steckanschlusses wenigstens eine im Querschnitt gesehen trichterförmige, die Hinterschneidung bildende Aufweitung auf. Die trichterförmige Aufweitung ist dabei vorzugsweise in Richtung des Einsatzteils auseinandergehend ausgerichtet, sodass der Hinterschnitt durch die Außenseite der Aufweitung gebildet wird. Theoretisch ist aber natürlich auch eine entgegengesetzte Ausrichtung der Aufweitung denkbar. Die Aufweitung erstreckt sich entlang zweier schräg zueinander ausgerichteten, gedachten Ebenen, sodass die Aufweitung an ihren Endseiten offen ausgebildet ist und zwei gegenüberliegende, in einem Winkel zueinander ausgerichtete Wände bildet. Gemäß einer alternativen Ausführungsform ist die trichterförmige Aufweitung punktsymmetrisch zu einer Längsachse ausgebildet, sodass die Aufweitung einen Trichter mit einer sich über den gesamten Umfang erstreckenden Seitenwand aufweist.

Vorzugsweise ist das Einsatzteil und/oder das Zwischenstück aus hochdichtem Polyethylen-Kunststoff (HDPE-Kunststoff) gefertigt, wodurch eine hohe Formstabilität, Festigkeit und Reparaturbeständigkeit gewährleistet wird. Besonders von Vorteil ist, wenn im verwendeten HDPE-Kunststoff mindestens ein Haftvermittler mit enthalten ist und insbesondere ist mindestens Maleinsäureanhydrid als Haftvermittler mit enthalten.

Das Gehäuse des Steckanschlusses ist vorzugsweise aus Polyamid, insbesondere glasfaserverstärkt gefertigt. Das Polyamid gewährleistet eine Beständigkeit der Steckverbindung auch bei hohen äußeren Beanspruchungen, wie durch Vibrationen, Querkräften und Axialkräften und ist für Steckverbindungen geeignet.

Der erfindungsgemäße Flüssigkeitstank zeichnet sich durch ein Flüssigkeitsentnahmemodul aus, das gemäß einer der oben beschriebenen Ausführungsformen ausgebildet ist. Hierdurch ergeben sich die oben bereits beschriebenen Vorteile.

Im Folgenden soll die Erfindung anhand der Zeichnung näher erläutert werden. Dazu zeigen
- Figur 1: ein Flüssigkeitsentnahmemodul zur Entnahme von Flüssigkeit aus einem Flüssigkeitstank in einer perspektivischen Darstellung,
- Figur 2: einen Steckanschluss des Flüssigkeitsentnahmemoduls in einer perspektivischen Schnittdarstellung,
- Figur 3: den Steckanschluss in einer ersten Explosionsdarstellung,
- Figur 4: den Steckanschluss in einer zweiten Explosionsdarstellung,
- Figur 5: eine alternative Ausführungsform des Flüssigkeitsentnahmemoduls in einer perspektivischen Darstellung und
- Figur 6: ein Gehäuse des Steckanschlusses des Flüssigkeitsentnahmemoduls gemäß der alternativen Ausführungsform.

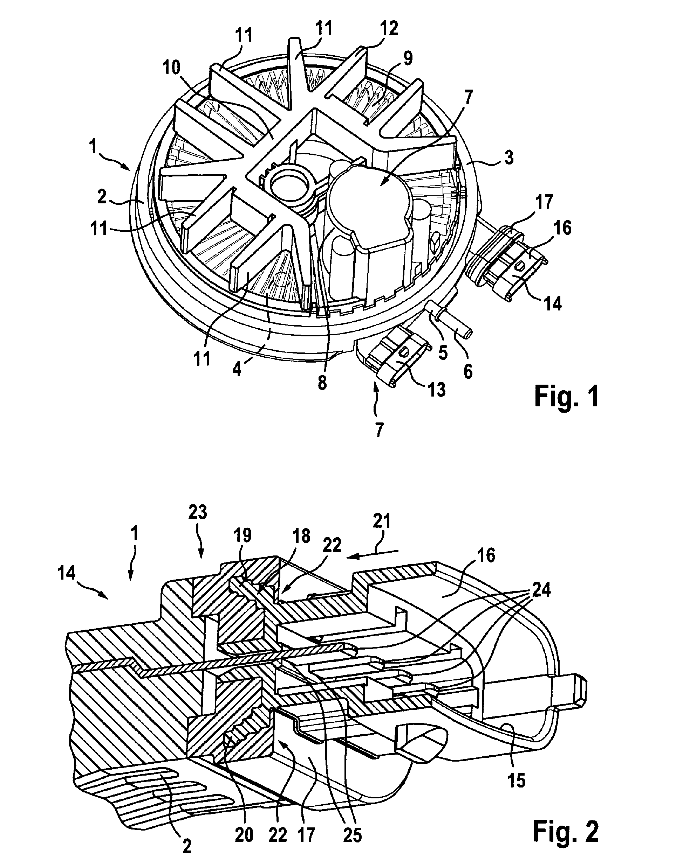

Figur 1 zeigt ein Flüssigkeitsentnahmemodul 1 zur Entnahme von Flüssigkeit aus einem Flüssigkeitstank. Das Flüssigkeitsentnahmemodul 1 weist ein Einsatzteil 2 auf, das aus hochdichtem Polyethylenkunststoff (HDPE) gefertigt ist. Das Einsatzteil 2 weist in dem vorliegenden Ausführungsbeispiel eine kreisförmige Grundfläche auf und ist zum Einsetzen in eine Tanköffnung derart ausgebildet, dass es mit einer axialen Kontaktfläche 3, die sich über den Außenumfang des Einsatzteils 2 erstreckt, an der die Tanköffnung aufweisenden Tankwand dicht verschweißt ist oder zum Beispiel an einem elastischen Element dicht anliegt. Das Einsatzteil 2 weist eine Entnahmeöffnung 4 auf, die im Boden des Einsatzteils 2 ausgebildet ist und in einen Entnahmekanal 5 der Fördereinrichtung 7 mündet, der zu einem radial nach außen abstehenden Anschlussstutzen 6 führt. Im montierten Zustand, wenn also das

Flüssigkeitsentnahmemodul 1 an dem Flüssigkeitstank angebracht ist, liegt der Anschlussstutzen 6 von außen zugänglich an der Außenseite des Flüssigkeitstanks. Dem Entnahmekanal 5 zugeordnet ist eine Fördereinrichtung 7, die in einer wannenförmigen Aufnahme 8 angeordnet ist. Die wannenförmige Aufnahme 8 erstreckt sich dabei in Richtung des Tankinnenraums, sodass die Aufnahme 8 ein die Fördereinrichtung vor der in dem Flüssigkeitstank befindlichen Flüssigkeit schützendes Gehäuse bildet. Die Fördereinrichtung 7 umfasst zweckmäßigerweise eine Förderpumpe, die an ihrer Saugseite mit der Entnahmeöffnung 4 und an ihrer Druckseite mit dem Anschlussstutzen 6 über den Entnahmekanal 5 verbunden ist. Weiterhin trägt das Einsatzteil 2 ein sich im Wesentlichen über den gesamten Boden des Einsatzteils 2 erstreckendes Filterelement 9, das der Entnahmeöffnung 4 derart zugeordnet ist, dass Flüssigkeit, die in die Entnahmeöffnung 4 gesaugt wird, zunächst das Filterelement 9 beziehungsweise Filtergewebe des Filterelements 9 passieren muss. Oberhalb des Filterelements 9 ist weiterhin ein Heizelement 10 angeordnet, das mehrere sich über das Filterelement 9 und das Einsatzteil 2 erstreckende Heizarme 11 aufweist. Das Heizelement 10 ist als elektrisch betriebenes Heizelement 10 ausgebildet, das mindestens ein, vorzugsweise zwei oder mehr PTC-Heizelemente aufweist, die einem Aluminiumgrundkörper zugeordnet sind, wobei Aluminiumgrundkörper und PTC-Heizelemente von einer Kunststoffumspritzung 12 eingehaust sind. Während die Fördereinrichtung 7 als Baueinheit in die Aufnahme 8 des Einsatzteils 2 eingebracht ist und einen eigenen Anschlussstecker 13 sowie den Anschlussstutzen 6 aufweist, werden die mit dem PTC-Heizelementen und Füllstandsensor verbundenen elektrischen Anschlussleitungen zu einem Steckanschluss 14 des Einsatzteils 2 geführt.

Figur 2 zeigt den Steckanschluss 14 in einer vergrößerten, perspektivischen Schnittdarstellung. Der Steckanschluss 14 ist separat von dem Einsatzteil 2 ausgebildet und bildet eine Steckaufnahme 15. Der Steckanschluss 14 weist dazu ein Gehäuse 16 auf, das an seinem freien Ende offen zur Aufnahme eines Steckers ausgebildet ist, und an seinem anderen Ende von einem Zwischenstück 17 umspritzt ist. Dazu weist das Gehäuse 16 an seinem dem Einsatzteil 2 zugewandten Ende eine trichterförmige Aufweitung 18 auf, die in Richtung des Einsatzteils 2 aufweitend ausgerichtet ist. Die Aufweitung 18 bildet somit zumindest zwei in einem Winkel zueinander ausgerichtete Wände 19, 20, die sich über die Breite des Gehäuses 16 erstrecken. Die Wände 19 und 20 beziehungsweise die Aufweitung 18 bildet dabei in Steckrichtung gesehen, wie durch einen Pfeil 21 angedeutet, einen Hinterschnitt 22. In dem Bereich des Hinterschnitts 22 beziehungsweise der Aufweitung 18 ist das Gehäuse 16 von dem Zwischenstück 17 umspritzt, sodass eine formschlüssige Verbindung zwischen dem Gehäuse 16 und dem Zwischenstück 17 insbesondere in Steckrichtung besteht. Unter der Steckrichtung ist hier sowohl die Kraftrichtung zu verstehen, die beim Zusammenstecken der Steckverbindung vorliegt, als auch die, die vorliegt, wenn ein Stecker von dem Steckanschluss 14 gelöst wird, also entgegen der durch den Pfeil 21 angedeuteten Richtung abgezogen wird. Das Zwischenstück 17 ist vorzugsweise aus einem mit dem Material des Einsatzteils 2 verschweißbaren Material gefertigt. Besonders bevorzugt ist das Zwischenstück 17 aus dem gleichen Material wie das Einsatzteil 2 gefertigt. Um den das Gehäuse 16 und das Zwischenstück 17 umfassenden Zweikomponentenstecker mit dem Einsatzteil 2 zu verbinden, wird das Zwischenstück 17 an seinem dem Einsatzteil 2 zugewandten Ende mit dem Einsatzteil 2 an einer Kontaktstelle 23 verschweißt. Die Kontaktstelle 23 erstreckt sich dabei vorzugsweise um die elektrischen Anschlussleitungen 24, die in die Steckaufnahme 15 des Gehäuses 16 ragen, herum. Die Anschlussleitungen 24 sind in dem Einsatzteil 2 eingebettet, beziehungsweise durch dieses umspritzt. Das Gehäuse 16 weist für jede der Anschlussleitungen 24 beziehungsweise Stanzgitter einen Durchgangskanal 25 auf, durch welchen die Anschlussleitungen in die Steckaufnahme 15 eindringen.

Durch die vorteilhafte Ausbildung des Flüssigkeitsentnahmemoduls 1 lässt sich das Gehäuse 16 des Steckanschluss 14 aus einem beliebigen Material, insbesondere aus einem für die Steckverbindung geeigneten und belastbaren Kunststoff fertigen, der nicht oder nur unter hohem Zusatzaufwand mit dem Kunststoff des Einsatzteils 2 verschweißbar wäre. Unter Zwischenschaltung des verschweißbaren Zwischenstücks 17 wird somit auf einfache Art und Weise eine feste und sichere Anbindung des Steckanschlusses 14 an das Einsatzteil 2 gewährleistet. Vorzugsweise ist das Gehäuse 16 aus einem Polyamid, insbesondere glasfaserverstärkt gefertigt. Das Zwischenstück 17 ist vorzugsweise aus dem gleichen Material wie das Einsatzteil 2 gefertigt, oder aus einem anderen, mit dem Einsatzteil 2 verschweißbaren Werkstoff, wie zum Beispiel Polyolefine, insbesondere hochdichtes Polyethylen oder Polypropylen. Besonders bevorzugt sind die Hinterschneidung sowie die Steckaufnahme 15 in Steckrichtung beabstandet zueinander angeordnet. Dadurch wird sichergestellt, dass das Zwischenstück sich nicht in einem Bereich befindet, in welchem es die elektrische Schnittstelle beeinflussen könnte. Um eine dichte Verbindung zwischen dem Gehäuse 16, dem Zwischenstück 17 und/oder dem Einsatzteil 2 zu gewährleisten, wird vorteilhafterweise mindestens einer der Kunststoffwerkstoffe mit einem Zusatzstoff, wie einem Haftvermittler ergänzt. Eine dichte Verbindung muss die Dichtheitsanforderungen für elektrische Stecker in den Fahrzeugen erfüllen, insbesondere sollten die Dichtheitsanforderungen an Stecker in der Bodennähe und im Motorraum erfüllt werden. Besonders bevorzugt ist, wenn beim HDPE-Werkstoff (zum Beispiel für Zwischenstück 17 oder Einsatzteil 2) als Haftvermittler Maleinsäureanhydrid (MAH) verwendet wird, um eine dichte Verbindung zu Polyamid-Werkstoff (zum Beispiel für Gehäuse 16) herzustellen. Es ist von Vorteil, wenn zuerst das Polyamid oder ein anderer Werkstoff als erstes hergestellt werden und anschließen sofort HDPE oder ein anderer Werkstoff mit niedrigerer Schmelztemperatur auf noch "warmes" Teil gespritzt wird. Falls aus technischen Gründen sofortige Umspritzung nicht möglich sein sollte, dann kann eine Vorwärmung außerhalb und/oder im Werkzeug Vorteile bezüglich Dichtheit bringen.

Vorzugsweise ist die Aufweitung 18 als umlaufende Kontur ausgebildet, sodass die Wände 19 und 20 ineinander übergehen, sodass beispielsweise ein ovalförmiger Trichter gebildet ist, und damit auf das Gehäuse 16 in alle Raumrichtungen wirkende Kräfte gut aufgenommen werden können. Die in Figur 2 dargestellte gestufte Ausbildung der Aufweitung 18 ist nur eine Möglichkeit. Natürlich ist es auch denkbar, die Wände 19 und 20 mit glatten Oberflächen zu versehen. Alternativ oder zusätzlich kann die Aufweitung 18 auch gekrümmte Bereiche vorsehen. Die Schweißverbindung an der Kontaktstelle 23 wird vorzugsweise durch geeignete Verfahren durchgeführt, wie zum Beispiel Ultraschall-, Heizelement-, Laser- oder Induktionsschweißverfahren.

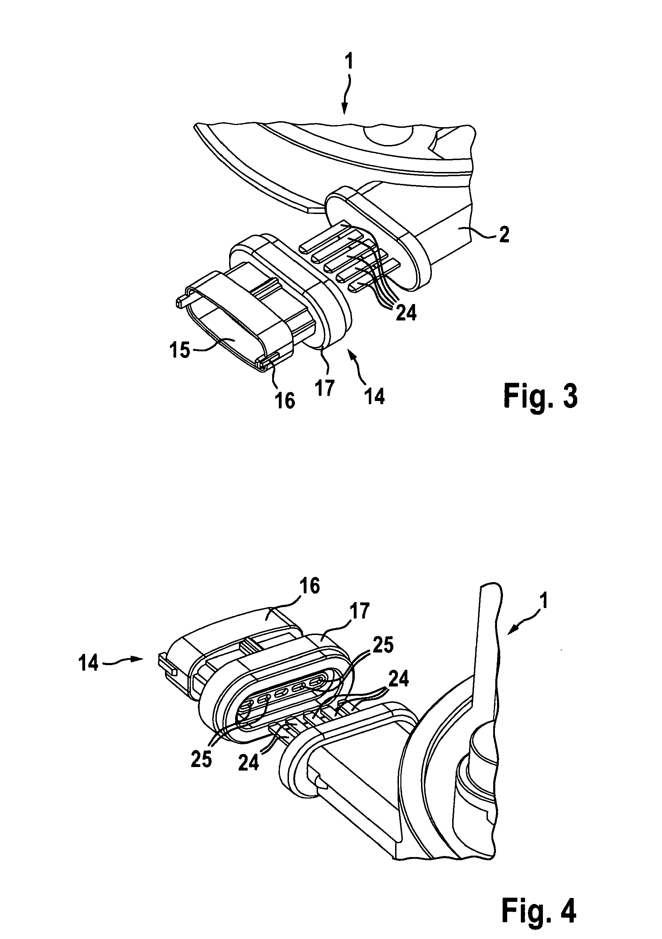

Figuren 3 und 4 zeigen hierzu den Montageprozess des Steckanschlusses 14, in zwei unterschiedlichen perspektivischen Ansichten. Figur 3 zeigt die aus dem Einsatzteil 2 heraustretenden Anschlussleitungen 24, die als Kontaktlanzen ausgebildet sind. Figur 4 zeigt die dem Einsatzteil 2 zugewandte Seite des Gehäuses 16 sowie des Zwischenstücks 17. Hierbei ist zu erkennen, dass das Zwischenstück 17 die Anschlussleitungen 24 im montierten Zustand umrahmt beziehungsweise voll umfänglich umgibt. Bei der Montage werden die Anschlusslanzen beziehungsweise Anschlussleitungen 24 in die entsprechenden Kanäle 25 des Gehäuse 16 eingeschoben, bis das Zwischenstück 17 an dem Einsatzteil 2 anliegt. Dann wird durch den oben genannten Schweißvorgang das Zwischenstück 17 mit dem Einsatzteil 2 verschweißt und eine dichte und belastbare Verbindung hergestellt.

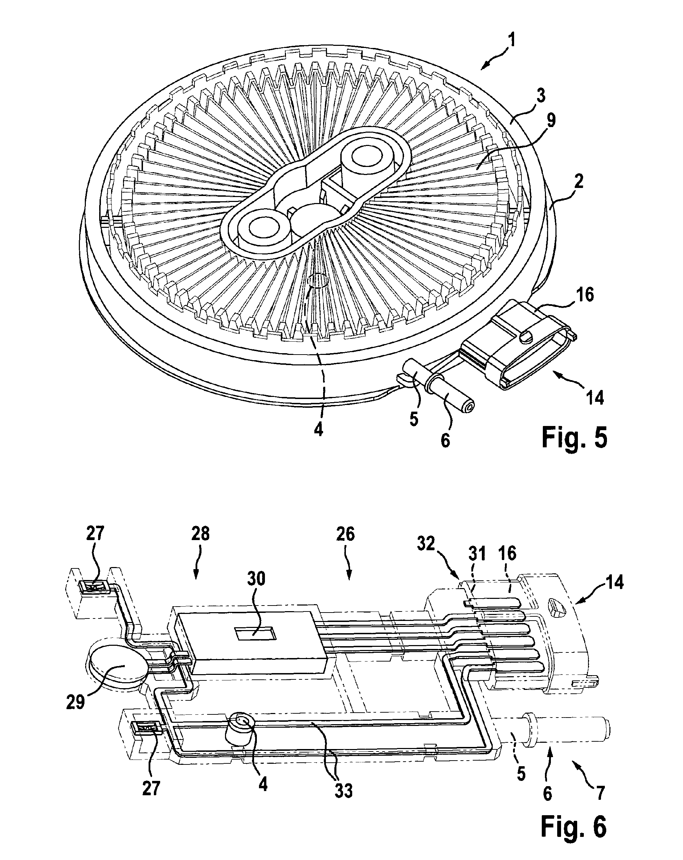

Gemäß einem alternativen Ausführungsbeispiel wird das Einsatzteil 2 direkt auf das Gehäuse 16 im Bereich des Hinterschnitts 22 aufgespritzt. Figur 5 zeigt hierzu das Flüssigkeitsentnahmemodul 1, das anstelle des wie oben beschrieben vorgesehenen Zweikomponentensteckers eine Lösung ohne Zwischenstück bietet. Dazu ist das Gehäuse 16 des Steckanschlusses 14 an seinem den Hinterschnitt 22 aufweisenden Bereich direkt von dem Material des Einsatzteils 2 umspritzt.

Figur 6 zeigt eine Baueinheit 26, die neben dem Gehäuse 16 für den Steckanschluss 14 Anschlusskontakte 27 für das Heizelement 10 sowie eine Füllstandserfassungseinrichtung 28 aufweist, die einen berührungslos arbeitenden Füllstandssensor 29 sowie eine Auswerteeinheit 30 umfasst, die alle von dem Material des Gehäuses 16 umspritzt sind. Der Füllstandsanzeiger 29 ist vorteilhafterweise als Ultraschallsensor ausgebildet. Die Baueinheit 26 wird bei der Montage vorzugsweise insgesamt von dem Material des Einsatzteils 2 umspritzt, sodass es vollständig in das Einsatzteil 2 integriert ausgebildet beziehungsweise angeordnet ist. Lediglich der Anschlussstutzen 7 sowie der Steckanschluss 14 bleiben frei von dem Material des Einsatzteils 2. In dem vorliegenden Ausführungsbeispiel gemäß Figur 6 weist das Gehäuse 16 nur einen kleinen, sich über den Umfang erstreckenden Vorsprung 31 auf, der einen Hinterschnitt 32 bildet. Gegebenenfalls kann auch der Vorsprung 31 entfallen, da die komplexe Gestaltung der Baueinheit 26 bereits genügend Hinterschnitte für das Material des Einsatzteils 2 bildet.

In dem vorliegenden Ausführungsbeispiel gemäß Figur 6 umfasst die Baueinheit 26 außerdem den Entnahmekanal 6 sowie die Entnahmeöffnung 5. Zwei der Anschlussleitungen 24 werden abschnittsweise parallel zu dem Entnahmekanal 6 geführt und sind vorzugsweise als Heizleitungen ausgebildet, sodass bei Inbetriebnahme des Heizelements 10 gleichzeitig der Entnahmekanal 6 durch die Heizleitungen 33 aufgewärmt und gegebenenfalls aufgetaut wird.

## Patentansprüche

1. Flüssigkeitsentnahmemodul (1) zur Entnahme von Flüssigkeit aus einem Flüssigkeitstank, insbesondere eines Abgasnachbehandlungssystems eines Kraftfahrzeugs, mit einem zumindest im Wesentlichen aus Kunststoff gefertigten, wenigstens eine Entnahmeöffnung (5) und wenigstens einen Steckanschluss (14) zum elektrischen Kontaktieren eines elektrischen Verbrauchers (10,7) des Flüssigkeitsentnahmemoduls (1) aufweisenden Einsatzteil (2), **dadurch gekennzeichnet, dass** ein Gehäuse (16) des Steckanschlusses (14) separat ausgebildet ist und wenigstens einen umspritzten Hinterschnitt (22,32) zur Befestigung an dem Einsatzteil (2) aufweist.

2. Flüssigkeitsentnahmemodul nach Anspruch 1, **dadurch gekennzeichnet, dass** der Hinterschnitt (22,32) des Gehäuses (16) von einem Zwischenstück (17) umspritzt ist, das stoffschlüssig mit dem Einsatzteil (2) verbunden/verbindbar ist, wobei insbesondere vorgesehen ist, dass der Kunststoff des Einsatzteils (2), des Gehäuses (16) und/oder des Zwiwschenstücks (17) einen Haftvermittler, insbesondere Maleinsäureanhydrid, aufweist.

3. Flüssigkeitsentnahmemodul nach einem der vorhergehenden Ansprüche, **dadurch gekennzeichnet, dass** der Hinterschnitt (22,32) in Steckrichtung wirkend angeordnet/ausgerichtet ist.

4. Flüssigkeitsentnahmemodul nach einem der vorhergehenden Ansprüche, **dadurch gekennzeichnet, dass** das Gehäuse (16) aus einem anderen Material wie das Einsatzteil (2) und das Zwischenstück (17) aus einem mit dem Einsatzteil (2) verschweißbaren Material gefertigt ist.

5. Flüssigkeitsentnahmemodul nach einem der vorhergehenden Ansprüche, **dadurch gekennzeichnet, dass** das Zwischenstück (17) aus dem gleichen Material wie das Einsatzteil (2) gefertigt ist.

6. Flüssigkeitsentnahmemodul nach einem der vorhergehenden Ansprüche, **dadurch gekennzeichnet, dass** sich der Hinterschnitt (22,32) über die gesamte Breite des Gehäuses (16), insbesondere über den gesamten Umfang des Gehäuses (16) erstreckt.

7. Flüssigkeitsentnahmemodul nach einem der vorhergehenden Ansprüche, **dadurch gekennzeichnet, dass** das Gehäuse (16) des Steckanschlusses (14) wenigstens eine im Querschnitt gesehen trichterförmige, die Hinterschneidung (22) bildende Aufweitung (18) aufweist.

8. Flüssigkeitsentnahmemodul nach einem der vorhergehenden Ansprüche, **dadurch gekennzeichnet, dass** das Einsatzteil (2) und/oder das Zwischenteil (17) aus hochdichtem Polyethylen gefertigt sind.

9. Flüssigkeitsentnahmemodul nach einem der vorhergehenden Ansprüche, **dadurch gekennzeichnet, dass** das Gehäuse (16) aus Polyamid, insbesondere glasfaserverstärkt gefertigt ist.

10. Flüssigkeitstank, insbesondere für ein Abgasnachbehandlungssystem eines Kraftfahrzeugs, mit einer Tanköffnung und mit einem in/an dem Flüssigkeitstank, die Tanköffnung verschließend angeordneten Flüssigkeitsentnahmemodul, das eine dem Tankinnenraum zugeordnete Entnahmeöffnung (5) und wenigstens einen von außen zugänglichen Steckanschluss (14) zum elektrischen Kontaktieren eines elektrischen Verbrauchers (10,7) des Flüssigkeitsentnahmemoduls (1) aufweist, **gekennzeichnet durch** die Ausbildung des Flüssigkeitsentnahmemoduls (1) nach einem oder mehreren der vorhergehenden Ansprüche.

## Claims

1. Liquid extraction module (1) for extracting liquid from a liquid tank, in particular of an exhaust-gas aftertreatment system of a motor vehicle, having an insert part (2) which is manufactured at least substantially from plastic and which has at least one extraction opening (5) and at least one plug connector (14) for the electrical contacting of an electrical consumer (10, 7) of the liquid extraction module (1), **characterized in that** a housing (16) of the plug connector (14) is formed separately and has at least one insert-moulded undercut (22, 32) for fastening to the insert part (2).

2. Liquid extraction module according to Claim 1, **characterized in that** the undercut (22, 32) of the housing (16) is insert-moulded in an intermediate piece (17) which is cohesively connected/connectable to the insert part (2), wherein it is provided in particular that the plastic of the insert part (2), of the housing (16) and/or of the intermediate piece (17) has an adhesion promoter, in particular maleic anhydride.

3. Liquid extraction module according to one of the preceding claims, **characterized in that** the undercut (22, 32) is arranged/aligned so as to act in the plugging-in direction.

4. Liquid extraction module according to one of the preceding claims, **characterized in that** the housing (16) is manufactured from a different material than the insert part (2), and the intermediate piece (17) is manufactured from a material that can be welded to the insert part (2).

5. Liquid extraction module according to one of the preceding claims, **characterized in that** the intermediate piece (17) is manufactured from the same material as the insert part (2).

6. Liquid extraction module according to one of the preceding claims, **characterized in that** the undercut (22, 32) extends over the entire width of the housing (16), in particular over the entire circumference of the housing (16).

7. Liquid extraction module according to one of the preceding claims, **characterized in that** the housing (16) of the plug connector (14) has at least one widening portion (18) which is funnelshaped as viewed in cross section and which forms the undercut (22).

8. Liquid extraction module according to one of the preceding claims, **characterized in that** the insert part (2) and/or the intermediate part (17) are manufactured from high-density polyethylene.

9. Liquid extraction module according to one of the preceding claims, **characterized in that** the housing (16) is manufactured from polyamide, and in particular has glass fibre reinforcement.

10. Liquid tank, in particular for an exhaust-gas aftertreatment system of a motor vehicle, having a tank opening and having a liquid extraction module which is arranged in/on the liquid tank so as to close off the tank opening, which liquid extraction module has an extraction opening (5) assigned to the tank interior and has at least one plug connector (14) which is accessible from the outside and which serves for the electrical contacting of an electrical consumer (10, 7) of the liquid extraction module (1), **characterized by** the design of the liquid extraction module (1) according to one or more of the preceding claims.

## Revendications

1. Module de prélèvement de liquide (1) pour prélever du liquide d'un réservoir de liquide, en particulier d'un système de post-traitement des gaz d'échappement d'un véhicule automobile, comprenant une partie d'insertion (2) fabriquée au moins essentiellement en matière plastique, présentant au moins une ouverture de prélèvement (5) et au moins un raccord enfichable (14) pour le contact électrique d'un consommateur électrique (10, 7) du module de prélèvement de liquide (1), **caractérisé en ce qu'**un boîtier (16) du raccord enfichable (14) est réalisé séparément et présente au moins une contre-dépouille surmoulée (22, 32) pour la fixation à la partie d'insertion (2).

2. Module de prélèvement de liquide selon la revendication 1, **caractérisé en ce que** la contre-dépouille (22, 32) du boîtier (16) est surmoulée par une pièce intermédiaire (17), qui est ou peut être connectée par engagement par liaison de matière à la partie d'insertion (2), la matière plastique de la partie d'insertion (2), du boîtier (16) et/ou de la pièce intermédiaire (17) présentant notamment un promoteur d'adhésion, en particulier un anhydride d'acide maléique.

3. Module de prélèvement de liquide selon l'une quelconque des revendications précédentes, **caractérisé en ce que** la contre-dépouille (22, 32) est disposée/orientée de manière à agir dans la direction d'enfichage.

4. Module de prélèvement de liquide selon l'une quelconque des revendications précédentes, **caractérisé en ce que** le boîtier (16) est fabriqué en un autre matériau que la partie d'insertion (2) et la pièce intermédiaire (17) est fabriquée en un matériau pouvant être soudé à la partie d'insertion (2).

5. Module de prélèvement de liquide selon l'une quelconque des revendications précédentes, **caractérisé en ce que** la pièce intermédiaire (17) est fabriquée en le même matériau que la partie d'insertion (2).

6. Module de prélèvement de liquide selon l'une quelconque des revendications précédentes, **caractérisé en ce que** la contre-dépouille (22, 32) s'étend sur toute la largeur du boîtier (16), en particulier sur toute la périphérie du boîtier (16).

7. Module de prélèvement de liquide selon l'une quelconque des revendications précédentes, **caractérisé en ce que** le boîtier (16) du raccord enfichable (14) présente au moins un élargissement (18) en forme d'entonnoir, vu en section transversale, formant la contre-dépouille (22).

8. Module de prélèvement de liquide selon l'une quelconque des revendications précédentes, **caractérisé en ce que** la partie d'insertion (2) et/ou la partie intermédiaire (17) sont fabriquées en polyéthylène de haute densité.

9. Module de prélèvement de liquide selon l'une quelconque des revendications précédentes, **caractérisé en ce que** le boîtier (16) est fabriqué en polyamide, notamment renforcé par des fibres de verre.

10. Réservoir de liquide, en particulier pour un système de post-traitement des gaz d'échappement d'un véhicule automobile, comprenant une ouverture de réservoir et un module de prélèvement de liquide disposé dans/au niveau du réservoir de liquide, de manière à fermer l'ouverture de réservoir, qui présente une ouverture de prélèvement (5) associée à l'espace interne du réservoir et au moins un raccord enfichable (14) accessible depuis l'extérieur pour le contact électrique d'un consommateur électrique (10, 7) du module de prélèvement de liquide (1), **caractérisé par** la réalisation du module de prélèvement de liquide (1) selon l'une quelconque ou plusieurs des revendications précédentes.
